(19) Europäisches Patentamt / European Patent Office / Office européen des brevets

(11) **EP 2 740 970 A1**

(12) **EUROPEAN PATENT APPLICATION**
published in accordance with Art. 153(4) EPC

(43) Date of publication:
**11.06.2014 Bulletin 2014/24**

(51) Int Cl.:
*F16H 37/06* (2006.01)   *B25J 17/00* (2006.01)

(21) Application number: **11870220.8**

(86) International application number:
**PCT/JP2011/067901**

(22) Date of filing: **04.08.2011**

(87) International publication number:
**WO 2013/018229 (07.02.2013 Gazette 2013/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Kabushiki Kaisha Yaskawa Denki Kitakyushu-shi, Fukuoka 806-0004 (JP)**

(72) Inventor: **AKAE, Hiromitsu**
**Kitakyushu-shi**
**Fukuoka 806-0004 (JP)**

(74) Representative: **Grünecker, Kinkeldey, Stockmair & Schwanhäusser**
**Leopoldstrasse 4**
**80802 München (DE)**

(54) **COMPOSITE DRIVE DEVICE AND ROBOT**

(57)   To provide a composite drive device that can prevent movement of a shaft while adopting a differential mechanism and to which a lightweight and compact gear mechanism with extremely small backlash is applicable. The composite drive device includes a first output shaft (11) supported rotatably around its axis, a first differential mechanism (1) and a second differential mechanism (2) arranged to face each other on the first output shaft (11), a first power source (21) driving the first differential mechanism (1) and a second power source (22) driving the second differential mechanism (2), and a second output shaft (12) being provided in a direction orthogonal to the first output shaft (11) between the first differential mechanism (1) and the second differential mechanism (2) and being rotatable around its axis in conjunction with driving of the first differential mechanism (1) and the second differential mechanism (2).

FIG.8

**Description**

Field

The present invention relates to a composite drive device and a robot.

Background

Conventional structures of joints in robots and the like generally have a plurality of shafts provided with respective independent actuators.

There has been developed a robot in which a joint mechanism is constituted by a composite drive device using a differential mechanism (for example, a differential gear mechanism called "diff") to allow one shaft to be used as a plurality of shafts at a joint (for example, see Patent Literature 1).

Specifically, two pairs of actuators are arranged so as to be opposed to each other, and driving gears attached to output shafts of the respective actuators so as to be opposed to each other and driven gears opposed to each other and in mesh with the respective driving gears constitute a gear mechanism. An output shaft having both of the driven gears of the gear mechanism attached thereto is used as two axes.

Citation List

Patent Literature

Patent Literature 1: Japanese Patent Application Laid-open No. 2005-279856

Summary

Technical Problem

However, in the joint mechanism disclosed in Patent Literature 1 above, a motor to which a speed reducer is directly coupled at a subsequent stage is used as the actuator that transmits power to the differential gear mechanism.

As represented by the robot in Patent Literature 1, when a composite drive device is used in a joint of robots and the like, a speed reducer is often used to obtain necessary torque. In this case, the speed reducer is installed between the differential gear mechanism and the power source. In particular, as in Patent Literature 1, when a differential gear mechanism is used as a composite drive device, it is inevitable to install a speed reducer between the gear mechanism and the power source to reduce the speed. The reason for this is that if the power source and the gear mechanism are directly interlocked and coupled with each other, one of two shafts moves with multiple turns at high speed around the other shaft, and it is not preferable to use the two shafts as an output shaft of a joint in a robot.

In this way, when a differential gear mechanism is used in a robot, power is transmitted to the gear mechanism after reducing the speed through a speed reducer, so that the gears tend to have more backlash. Therefore, the application of the differential gear mechanism to the drive unit of a robot, for example, poses a problem in that positioning accuracy is degraded. Because the differential gear mechanism having such a constitution has large transmission torque, a robust material such as iron is used as a material of the gears, and the module and the diameter become larger thereby increasing the weight.

The technique disclosed herein is made in view of the foregoing and aims to provide a composite drive device and a robot including the composite drive device that can prevent movement of a shaft while adopting a differential gear mechanism and that can reduce the backlash amount of gears as much as possible.

Solution to Problem

According to an aspect of an embodiment, a composite drive device includes: a first output shaft that is supported rotatably around an axis thereof; a first differential mechanism and a second differential mechanism that are arranged to face each other on the first output shaft; a second output shaft that is provided in a direction orthogonal to the first output shaft between the first differential mechanism and the second differential mechanism and is rotatable around an axis thereof in conjunction with driving of the first differential mechanism and the second differential mechanism; and a first power source and a second power source that respectively drive the first differential mechanism and the second differential mechanism. Power from the first power source and the second power source is distributable to the first output shaft and the second output shaft, without allowing the second output shaft to move around the first output shaft.

Advantageous Effects of Invention

According to one aspect of each of the composite drive device and the robot disclosed in the present application, movement of the shaft can be prevented while adopting the differential mechanism, and the power source and the differential mechanism can be directly interlocked and coupled. This can arrange a speed reducer at a subsequent stage of the differential mechanism, and can reduce the backlash amount of gears of the differential mechanism as much as possible. In addition, this allows the use of a lightweight and compact gear mechanism, which can contribute to greater energy saving.

Brief Description of Drawings

FIG. 1 is a diagram illustrating an internal structure of a composite drive device according to an embodiment.
FIG. 2 is a diagram illustrating a drive example 1 of the composite drive device according to the embodiment.
FIG. 3 is a diagram illustrating a drive example 2 of the composite drive device according to the embodiment.
FIG. 4 is a diagram illustrating a drive example 3 of the composite drive device according to the embodiment.
FIG. 5 is a diagram illustrating a drive example 4 of the composite drive device according to the embodiment.
FIG. 6 is a front view of a robot including the composite drive device according to the embodiment.
FIG. 7 is a plan view of the robot.
FIG. 8 is an enlarged view of a main part of the robot.
FIG. 9 is a diagram illustrating a modification of a power source of the composite drive device.

Description of Embodiments

Embodiments of a composite drive device and a robot including the composite drive device disclosed in the present application will be described below in details with reference to the accompanying drawings. It should be noted that the present invention is not limited by the illustration in the following embodiments.

Embodiments

[Overview of Composite Drive Device]

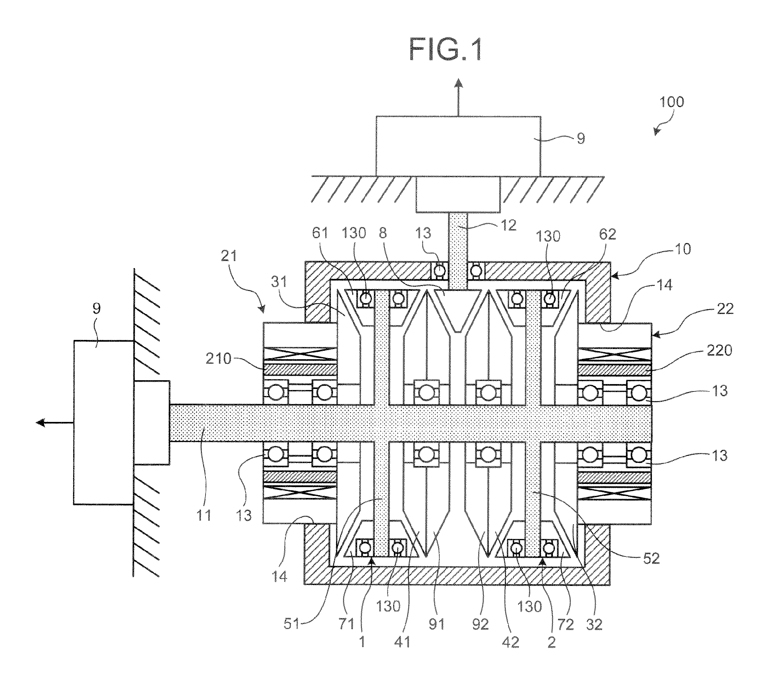

First, an overview of the composite drive device according to an embodiment will be described with reference to FIG. 1. FIG. 1 is a diagram illustrating an internal structure of the composite drive device according to an embodiment.
As illustrated in FIG. 1, this composite drive device 100 according to the present embodiment has a first output shaft 11 that is provided in the longitudinal direction along approximately the center of a housing 10 having an approximately cylindrical shape and that is supported rotatably around its axis.
A first differential mechanism 1 and a second differential mechanism 2 interlocked and coupled with the first output shaft 11 are arranged to face each other along the first output shaft 11. That is, the first output shaft 11, and the first differential mechanism 1 and the second differential mechanism 2 arranged to face each other therealong are accommodated in the housing 10.
Although the first differential mechanism 1 is arranged on the left side as viewed toward the drawing sheet in FIG. 1 and the second differential mechanism 2 is arranged on the right side, the arrangement may be reversed.
Furthermore, a second output shaft 12 is provided between the first differential mechanism 1 and the second differential mechanism 2 in a direction orthogonal to the first output shaft 11. Then, the second output shaft 12 is allowed to rotate around its axis in conjunction with the driving of the first differential mechanism 1 and the second differential mechanism 2. The constitution in which the second output shaft 12 is in conjunction with the driving of the first differential mechanism 1 and the second differential mechanism 2 will be described later.
The composite drive device 100 according to the present embodiment includes a first hollow actuator 21 having a first motor unit 210 that is a first motor unit, as a first power source driving the first differential mechanism 1, and a second hollow actuator 22 having a second motor unit 220 that is a second motor unit, as a second power source driving the second differential mechanism 2. The first hollow actuator 21 and the second hollow actuator 22 may have a well-known structure but do not have a speed reduction mechanism and the like.
With the composite drive device 100 constituted as described above, power produced through high-speed rotation of the first hollow actuator 21 and the second hollow actuator 22 can be distributed to the first output shaft 11 and the second output shaft 12, and the second output shaft 12 does not move around the first output shaft 11.
More specifically, a constitution that allows the first output shaft 11 and the second output shaft 12 to interfere with each other and to be driven in cooperation with each other is implemented, as in a coupled drive mechanism, without one (here, the second output shaft 12) of the two shafts 11, 12 moving around the other shaft (here, the first output shaft 11) at high speed with multiple turns.

Furthermore, the first output shaft 11 and the second output shaft 12 are supported with the housing 10 to be rotatable around the respective own axes. In addition, the first hollow actuator 21 is mounted on one longitudinal end of the housing 10, and the second hollow actuator 22 is mounted on the other longitudinal end.

More specifically, as illustrated in the figure, actuator mounting holes 14, 14 are provided at both ends of the housing 10, and the first hollow actuator 21 and the second hollow actuator 22 are disposed in the respective actuator mounting holes 14. Bearings 13 are provided appropriately at predetermined positions in the first hollow actuator 21, the second hollow actuator 22, and the housing 10, so that the first output shaft 11 and the second output shaft 12 are rotatably supported through those bearings 13.

In this manner, the first differential mechanism 1 and the second differential mechanism 2 are accommodated in the housing 10, the housing 10 supports the first output shaft 11 and the second output shaft 12, and the first hollow actuator 21 and the second hollow actuator 22 are attached to both ends of the housing 10, whereby the composite drive device 100 can be formed as a unit.

When the composite drive device 100 is formed as a unit, the first hollow actuator 21 and the second hollow actuator 22 may also be accommodated in the housing 10.

Here, the first differential mechanism 1 and the second differential mechanism 2 that are both constituted by a gear mechanism will be described specifically.

As illustrated in FIG. 1, the first differential mechanism 1 includes a first driving gear 31 and a first driven gear 41 that are mounted on the first output shaft 11 to face each other and are each constituted by a bevel gear, and a pair of first planetary gears 61, 71 that are rotatably supported on both ends of a first coupling shaft 51 coupled to the first output shaft 11 in the shape of a cross and are each meshed with the first driving gear 31 and the first driven gear 41.

In a similar manner, the second differential mechanism 2 includes a second driving gear 32 and a second driven gear 42 that are mounted on the first output shaft 11 to face each other and are each constituted by a bevel gear, and a pair of second planetary gears 62 and 72 that are rotatably supported on both ends of a second coupling shaft 52 coupled to the first output shaft 11 in the shape of a cross and are each meshed with the second driving gear 32 and the second driven gear 42.

The first and second planetary gears 61, 71, 62, 72 are also constituted by bevel gears and, as illustrated in the figure, the first planetary gears 61, 71 and the second planetary gears 62, 72 formed of bevel gears are coupled to the first coupling shaft 51 and the second coupling shaft 52 through the bearings 130.

Therefore, the first planetary gears 61, 71 rotate about the first coupling shaft 51 and revolve about the first output shaft 11 at the same time. The second planetary gears 62, 72 rotate about the second coupling shaft 52 and revolve about the first output shaft 11 at the same time.

The second output shaft 12 has an output gear 8 fixed at the base end thereof, and the output gear 8 is meshed with the outer side of each of the first driven gear 41 and the second driven gear 42 of the first differential mechanism 1 and the second differential mechanism 2 that face each other.

Specifically, as illustrated in the figure, the driving gears 31, 32 of the first differential mechanism 1 and the second differential mechanism 2 are directly coupled to the first hollow actuator 21 and the second hollow actuator 22, respectively, without a speed reduction mechanism and the like interposed therebetween, and output driven gears 91, 92 in mesh with the output gear 8 of the second output shaft 12 are provided on the outer side of the driven gears 41, 42.

In the present embodiment, the output driven gears 91, 92 are formed to have the same constitution including the diameter, the number of teeth, and the like as those of the first and second driven gears 41, 42, and they are disposed back to back.

Although the gears in mesh with the output gear 8 may be separately provided as the output driven gears 91, 92 as described above, a teeth row in mesh with the output gear 8 may be integrally formed on the outside surface of each of the first driven gear 41 and the second driven gear 42. The gear ratio GR between the output gear 8 and the other gears including the output driven gears 91, 92 (the first driving gear 31 and the first driven gear 41, the second driving gear 32 and the second driven gear 42) can be set appropriately.

With the aforementioned configuration, the rotation of the first hollow actuator 21 (the second hollow actuator 22) is transmitted as power to the first output shaft 11 through the first coupling shaft 51 (the second coupling shaft 52) of the first differential mechanism 1 (the second differential mechanism 2). The rotation of the first hollow actuator 21 (the second hollow actuator 22) is also transmitted as power to the second output shaft 12 through the output driven gear 91 (92) of the first differential mechanism 1 (the second differential mechanism 2).

As described above, in the composite drive device 100 according to the present embodiment, the first differential mechanism 1 interlocked and coupled with the first hollow actuator 21 and the second differential mechanism 2 interlocked and coupled with the second hollow actuator 22 are provided side by side with a predetermined spacing therebetween on the first output shaft 11, and a predetermined rotational speed is allocated to the first output shaft 11 and the second output shaft 12 in accordance with an output difference from the actuators 21, 22.

In the present embodiment, a speed reducer 9 is coupled as a speed reduction device at the subsequent stage of each of the first output shaft 11 and the second output shaft 12. More specifically, in the present embodiment, the first hollow actuator 21 is directly coupled to the first differential mechanism 1, and the second hollow actuator 22 is directly coupled to the second differential mechanism 2 without a speed reduction device or the like interposed therebetween in either case.

The respective speed reducers 9 are then coupled to the first output shaft 11 and the second output shaft 12 such that necessary torque can be obtained from the first output shaft 11 and the second output shaft 12.

Because the speed reducers 9 are arranged at the respective subsequent stages of the first differential mechanism 1 and the second differential mechanism 2 as described above, the amount of backlash produced in the first differential mechanism 1 and the second differential mechanism 2 can also be reduced to 1/reduction gear ratio. Furthermore, because the transmission torque in the first and second differential mechanisms 1, 2 is small, the gears that constitute the first and second differential mechanisms 1, 2 (the first driving gear 31, the first driven gear 41, the second driving gear 32, the second driven gear 42, the output gear 8, and the like) can be formed as a small module.

Even with the first output shaft 11 and the second output shaft 12 rotating at high speed as described above, there is no turning movement of the shafts. Therefore, the provision of the speed reducers 9 at the subsequent stages of the gear mechanisms can make a practical composite drive device 100.

In addition, because the backlash is reduced as much as possible, the positioning accuracy when using the present composite drive device 100 is improved, and application to devices that require precise operations becomes possible.

As will be described in details later, the rotation of the first output shaft 11 does not become greater than the rotational speed of the rotor shaft of the first hollow actuator 21 or the second hollow actuator 22 (the hollow shaft of the first motor unit 210 or the second motor unit 220), and therefore, the speed reducer 9 may not be coupled to the first output shaft 11.

[Drive Example of Composite Drive Device]

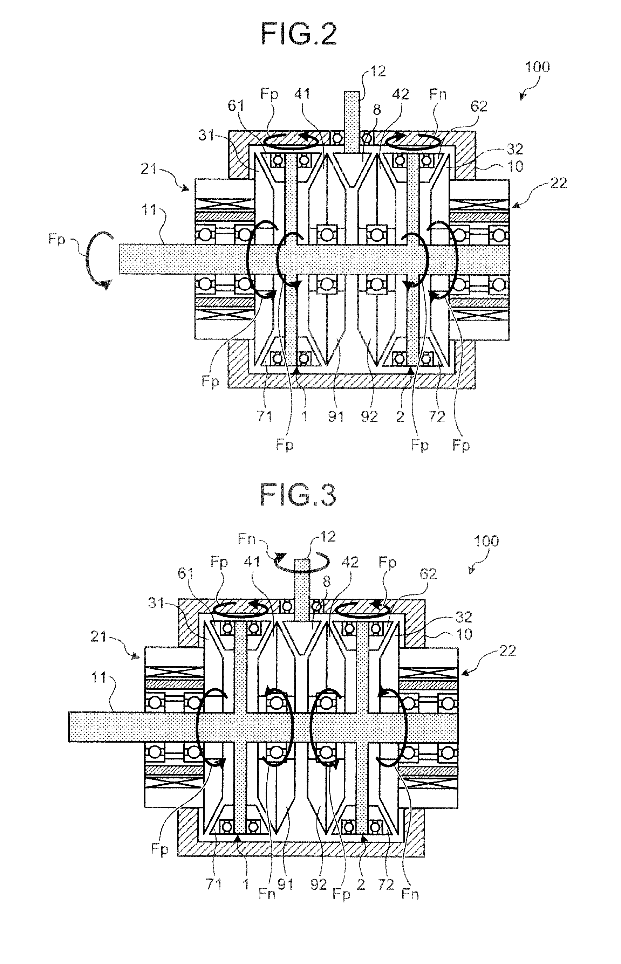

FIG. 2 to FIG. 5 illustrate drive examples of the composite drive device 100 according to the present embodiment. The allocation of rotation to the first output shaft 11 and the second output shaft 12 based on the power input from the first hollow actuator 21 and the second hollow actuator 22 will be described with reference to the figures. When the rotating direction of a shaft, etc. is illustrated, the direction indicated by the arrow Fp in the figures is forward rotation, and the direction indicated by the arrow Fn is reverse rotation.

FIG. 2 illustrates a case in which the rotational speeds of the first hollow actuator 21 and the second hollow actuator 22 caused by the first and second motor units 210, 220 are both 1000 rpm, and the rotating directions are also the same (for example, both forward rotation). FIG. 3 illustrates a case in which the rotational speeds of the first hollow actuator 21 and the second hollow actuator 22 are both 1000 rpm, while the rotating directions are opposite to each other.

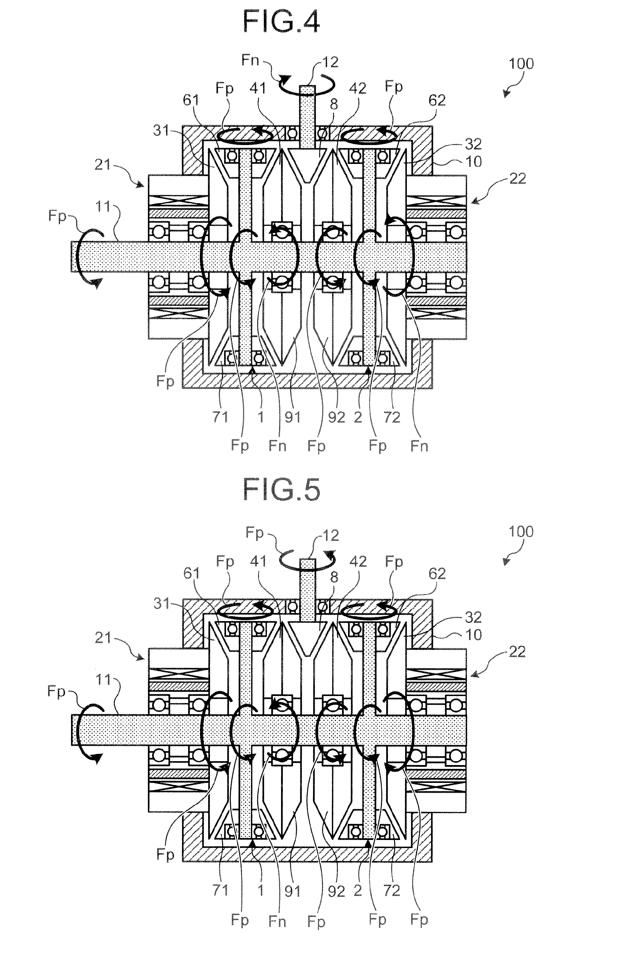

FIG. 4 illustrates a case in which the rotational speed of the first hollow actuator 21 is 500 rpm, the rotational speed of the second hollow actuator 22 is 1000 rpm, and the rotating directions are the same (for example, both forward rotation). FIG. 5 illustrates a case in which the rotational speed of the first hollow actuator 21 is 500 rpm, and the rotational speed of the second hollow actuator 22 is 1000 rpm, similarly, but the rotating directions are opposite to each other.

In the composite drive device 100 according to the present embodiment, because the first and second driving gears 31, 32 are directly coupled to the first and second hollow actuators 21, 22, the first and second driving gears 31, 32 rotate at the same rotational speed as those of the first and second hollow actuators 21, 22.

The first coupling shaft 51 and the second coupling shaft 52 are both coupled to the first output shaft 11. That is, the first coupling shaft 51, the second coupling shaft 52, and the first output shaft 11 rotate integrally.

On the other hand, the second output shaft 12 does not move, and the output gear 8 in mesh with the output driven gears 91, 92 rotates around its axis (the second output shaft 12). Here, the output driven gears 91, 92 are installed on the same shaft to face each other in mesh with the output gear 8, so that the output driven gear 91 and the output driven gear 92 always have the same rotational speed and have opposite rotating directions.

Therefore, the relation between the rotational speed N91 of the output driven gear 91 and the rotational speed N92 of the output driven gear 92 is expressed by the following expression.

$$N91 = -N92 \ldots \text{(Equation 1)}$$

The first differential mechanism 1 and the second differential mechanism 2 have the following relation.

That is, in the first differential mechanism 1, the following relational expression holds between the rotational speed N11 of the first output shaft 11, the rotational speed of the first hollow actuator 21, that is, the rotational speed N31 of the first driving gear 31, and the rotational speed N91 of the output driven gear 91.

$$N11 = (N31 + N91)/2 \ldots \text{(Equation 2)}$$

In the second differential mechanism 2, the following relational expression holds between the rotational speed N11 of the first output shaft 11, the rotational speed of the second hollow actuator 22, that is, the rotational speed N32 of the second driving gear 32, and the rotational speed N92 of the output driven gear 92.

$$N11 = (N32 + N92)/2 \ldots \text{(Equation 3)}$$

N31 - N32 = N92 - N91 is derived from Equation 2 and Equation 3, and the following expression is further derived from Equation 1.

$$N91 = (N32 - N31)/2 \ldots \text{(Equation 4)}$$

$$N92 = (N31 - N32)/2 \ldots \text{(Equation 5)}$$

When the ratio in number of teeth (gear ratio) between the output driven gears 91, 92 and the output gear 8 is GR, the following relation holds between the rotational speeds N91, N92 of the output driven gears 91, 92 and the rotational speed N8 of the output gear 8 (the rotational speed N12 of the second output shaft 12).

$$N8 = N12 = GR \cdot N91 \ (-N92) \ldots \text{(Equation 6)}$$

The example in FIG. 2 is explained. Here, the rotational speeds of the first hollow actuator 21 and the second hollow actuator 22 (the rotational speed N31 of the first driving gear 31 and the rotational speed N32 of the second driving gear 32) are both 1000 rpm, and therefore, Equation 4 and Equation 5 give N91 = N92 = 0.

That is, the first driving gear 31 and the second driving gear 32 have the same rotating direction, that is clockwise, and neither the output driven gear 91 nor the output driven gear 92 rotates because there is no imbalance between the respective inputs.

Then, based on N91 = N92 = 0, Equation 6 gives N8 = N12 = 0. That is, because neither the output driven gear 91 nor the output driven gear 92 rotates, the output gear 8 in mesh with them does not rotate either, as a matter of course. That is, the second output shaft 12 having the output gear 8 fixed at the base end thereof does not rotate either, resulting in the rotational speed N12 of the second output shaft 12 = 0.

Based on the rotational speed N31 of the first driving gear 31 (the rotational speed of the first hollow actuator 21) = the rotational speed N32 of the second driving gear 32 (the rotational speed of the second hollow actuator 22) = 1000 rpm, N11 = 500 rpm is derived from Equation 2 or Equation 3. That is, the first output shaft 11 rotates forwardly at 500 rpm (see the arrow Fp).

As listed in Table 1, in the example illustrated in FIG. 2, the rotational speed of the first hollow actuator 21 serving as an input = the rotational speed of the second hollow actuator 22 = 1000 rpm is satisfied, whereas the rotational speed N11 of the first output shaft 11 = 500 rpm, and the rotational speed N12 of the second output shaft 12 = 0 rpm are satisfied. [Table 1]

(Table 1)

| | First hollow actuator 21 | Second hollow actuator 22 | First output shaft 11 | Second output shaft 12 |
|---|---|---|---|---|
| Rotational speed (rpm) | 1000 | 1000 | 500 | 0 |

Next, a drive example of the composite drive device 100 illustrated in FIG. 3 will be described. FIG. 3 illustrates a case in which the rotational speeds of the first hollow actuator 21 and the second hollow actuator 22, that is, the rotational speed N31 of the first driving gear 31 and the rotational speed N32 of the second driving gear 32 are both 1000 rpm, while the first hollow actuator 21 rotates forwardly and the second hollow actuator 22 rotates reversely. That is, N31 = 1000 rpm, and N32 = -1000 rpm are satisfied.

In this case, N91 = -1000 rpm is derived from Equation 4, and N92 = 1000 rpm is derived from Equation 5.

Therefore, Equation 2 or Equation 3 gives N11 = 0 rpm.

Furthermore, Equation 6 gives N8 = N12 = -1000 · GRrpm. That is, in the example illustrated in FIG. 3, as illustrated in the figure, the first driving gear 31 and the second driving gear 32 have the same rotational speed and have the rotating directions opposite to each other, so that the first output shaft 11 does not rotate. That is, the rotational speed N11 of the first output shaft 11 = 0 is satisfied. On the other hand, the second output shaft 12 rotates reversely at 1000 GRrpm (see the arrow Fn).

As listed in Table 2, in the example illustrated in FIG. 3, the rotational speed of the first hollow actuator 21 serving as an input = 1000 rpm, and the rotational speed of the second hollow actuator 22 = -1000 rpm are satisfied, whereas the rotational speed N11 of the first output shaft 11 = 0 rpm, and the rotational speed N12 of the second output shaft 12 = -1000 GRrpm are satisfied. When the rotating direction of the first planetary gears 61, 71 and the second planetary gears 62, 72 is forward, the second output shaft 12 rotates reversely (see the arrow Fn). [Table 2]

(Table 2)

| | First hollow actuator 21 | Second hollow actuator 22 | First output shaft 11 | Second output shaft 12 |
|---|---|---|---|---|
| Rotational speed (rpm) | 1000 | -1000 | 0 | -1000 GR |

Next, a drive example of the composite drive device 100 illustrated in FIG. 4 will be described. FIG. 4 illustrates a case in which the rotational speed of the first hollow actuator 21, that is, the rotational speed N31 of the first driving gear 31 is 1000 rpm, and the rotational speed of the second hollow actuator 22, that is, the rotational speed N32 of the second driving gear 32 is 500 rpm, while the first hollow actuator 21 rotates forwardly and the second hollow actuator 22 rotates reversely. That is, N31 = 1000 rpm, and N32 = -500 rpm are satisfied.

In this case, N91 = -750 rpm is derived from Equation 4, and N92 = 750 rpm is derived from Equation 5.

Therefore, Equation 2 or Equation 3 gives N11 = 125 rpm.

Furthermore, Equation 6 gives N8 = N12 = -750 · GRrpm. That is, in the example illustrated in FIG. 4, as illustrated in the figure, the first output shaft 11 rotates forwardly at 125 rpm (see the arrow Fp), and the second output shaft 12 rotates reversely at 750 · GRrpm (see the arrow Fn).

As listed in Table 3, in the example illustrated in FIG. 4, the rotational speed of the first hollow actuator 21 serving as an input = 1000 rpm, and the rotational speed of the second hollow actuator 22 = -500 rpm are satisfied, whereas the rotational speed N11 of the first output shaft 11 = 125 rpm, and the rotational speed N12 of the second output shaft 12 = -750 · GRrpm are satisfied. Also in this case, the second output shaft 12 rotates in the opposite direction to the rotating direction of the first planetary gears 61, 71 and the second planetary gears 62, 72. [Table 3]

(Table 3)

| | First hollow actuator 21 | Second hollow actuator 22 | First output shaft 11 | Second output shaft 12 |
|---|---|---|---|---|
| Rotational speed (rpm) | 1000 | -500 | 125 | -750 · GR |

Next, a drive example of the composite drive device 100 illustrated in FIG. 5 will be described. FIG. 5 illustrates a case in which the rotational speed of the first hollow actuator 21, that is, the rotational speed N31 of the first driving gear 31 is 1000 rpm, and the rotational speed of the second hollow actuator 22, that is, the rotational speed N32 of the second driving gear 32 is 500 rpm, and both rotate forwardly. That is, N31 = 1000 rpm, and N32 = 500 rpm are satisfied.

In this case, N91 = -250 rpm is derived from Equation 4, and N92 = 250 rpm is derived from Equation 5.

Therefore, Equation 2 or Equation 3 gives N11 = 375 rpm.

Furthermore, Equation 6 gives N8 = N12 = 250 · GRrpm. That is, in the example illustrated in FIG. 5, as illustrated in the figure, the first output shaft 11 rotates forwardly at 375 rpm (see the arrow Fp), and the second output shaft 12 rotates forwardly at 250 · GRrpm (see the arrow Fp).

As listed in Table 4, in the example illustrated in FIG. 5, the rotational speed of the first hollow actuator 21 serving as an input = 1000 rpm, and the rotational speed of the second hollow actuator 21 = 500 rpm are satisfied, whereas the rotational speed N11 of the first output shaft 11 = 375 rpm, and the rotational speed N12 of the second output shaft 12 = 250 · GRrpm are satisfied. [Table 4]

(Table 4)

|  | First hollow actuator 21 | Second hollow actuator 22 | First output shaft 11 | Second output shaft 12 |
|---|---|---|---|---|
| Rotational speed (rpm) | 1000 | 500 | 375 | 250 · GR |

The composite drive device 100 described above uses two differential mechanisms, namely, the first differential mechanism 1 and the second differential mechanism 2, whereby the shaft movement is prevented while using the differential mechanism. Even with the shafts rotating at high speed, the speed reducers 9 are provided at the subsequent stages to make a practical composite drive device 100. Accordingly, significant energy saving can be achieved by adopting a lightweight and compact gear mechanism with extremely small backlash suitably to a joint of a robot as described later, for example.

[Constitution of Robot Having Composite Drive Device]

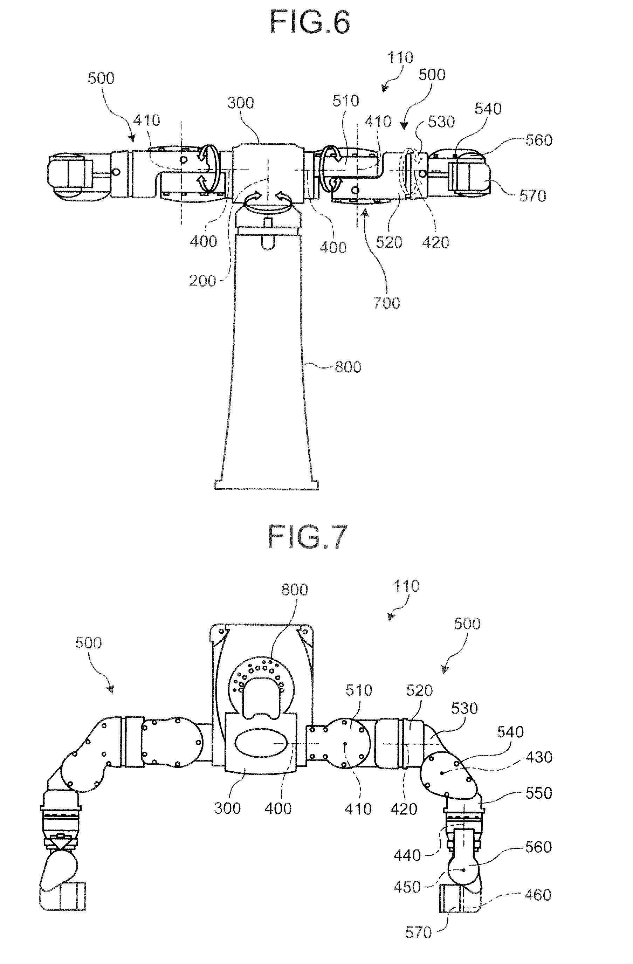

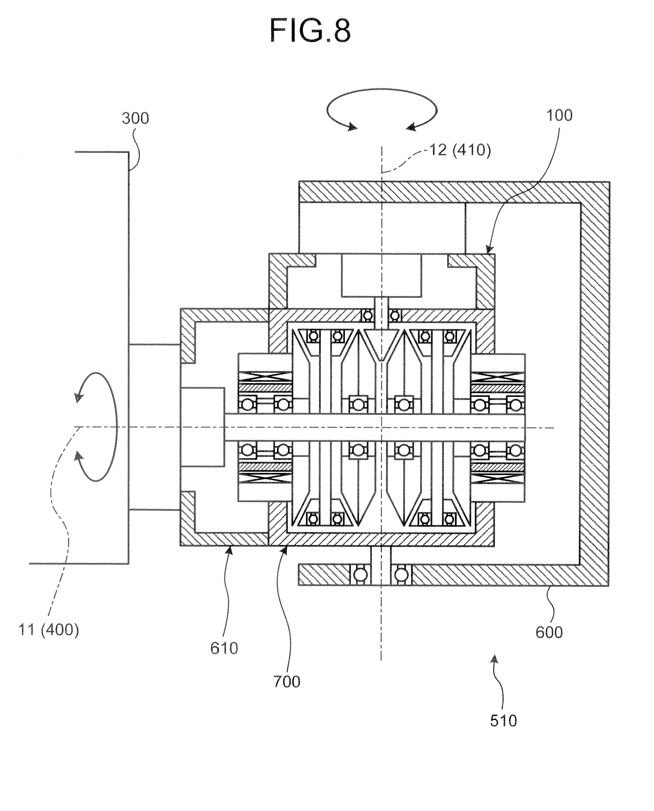

The composite drive device 100 according to the embodiment described above can be applied to a joint structure of a robot. FIG. 6 is a front view of a robot including the composite drive device 100 according to the embodiment. FIG. 7 is a plan view of the robot. FIG. 8 is an enlarged view of a main part of the robot. Hereinafter, the gravity direction is called "vertical direction", and the direction orthogonal to the vertical direction is called "horizontal direction".

As illustrated in FIG. 6 and FIG. 7, a robot 110 including the composite drive device 100 according to the embodiment is a dual-arm robot that has, at an upper end of a body 800, a shoulder 300 swiveling in the horizontal direction about a swivel axis 200 extending in the vertical direction, and also has, at the left and right ends of the shoulder 300, arm units 500 rotatable about a pivot axis 400 extending in the horizontal direction.

The left and right arm units 500 have the same constitution having six joints and can make motion with a higher degree of freedom than human beings.

The left and right arm units 500 each have a first arm section 510 that has a base end coupled to the shoulder 300 through the pivot axis 400 and rolls around the pivot axis 400, and a second arm section 520 that is coupled to the first arm section 510 through a first axis 410 extending in the vertical direction and swivels about the first axis 410 in the horizontal direction.

The left and right arm units 500 each also include a third arm section 530 that is coupled to the second arm section 520 through a second axis 420 extending in the horizontal direction and rolls about the second axis 420, and a fourth arm section 540 that is coupled to the third arm section 530 through a third axis 430 extending in the vertical direction and swivels about the third axis 430 in the horizontal direction.

The left and right arm units 500 each further include a fifth arm section 550 that is coupled to the fourth arm section 540 through a fourth axis 440 extending in the horizontal direction and rolls about the fourth axis 440, and a sixth arm section 560 that is coupled to the fifth arm section 550 through a fifth axis 450 extending in the vertical direction and swivels about the fifth axis 450 in the horizontal direction.

A wrist 570 is coupled to the front end of the six arm section 560 through a six axis 460 extending in the horizontal direction, and the wrist 570 is capable of rolling around the sixth axis 460.

An end effector (not illustrated) is provided at the front end of the wrist 570 to allow the robot 110 to perform, for example, unpacking of cardboard cartons with efficiency superior to human beings.

The composite drive device 100 described above is used in a joint 700 of the first arm section 510 interlocked and coupled with the shoulder 300 of the aforementioned robot 110, as illustrated in FIG. 6.

More specifically, as illustrated in FIG. 8, the composite drive device 100 is disposed in the first arm section 510 to form the joint 700, and the first output shaft 11 illustrated in FIGS. 1 to 5 is applied to the pivot axis 400, and the second output shaft 12 is applied to the first axis 410. As illustrated in the figure, the composite drive device 100 and the first arm section 510 are coupled through frames 600, 610.

In this way, in the joint of the robot 110, power from the first hollow actuator 21 and the second hollow actuator 22 is distributed to the pivot axis 400 and the first axis 410 through the lightweight and compact gear mechanism having the first differential mechanism 1 and the second differential mechanism 2 with the backlash reduced as much as possible.

In the robot 110 according to the present embodiment, the composite drive device 100 in which two differential mechanisms, namely, the first differential mechanism 1 and the second differential mechanism 2 are used and the speed reducers 9 are provided at the subsequent stages of the gear mechanisms is applied to the joint structure. Therefore, the gear mechanisms can be reduced in weight and size, and the backlash can be significantly reduced.

Accordingly, the positioning accuracy when applying the composite drive device 100 to the joint structure is improved, and more precise operations can be readily performed by the robot 110, while significant energy saving is possible.

Modifications to the foregoing embodiment and further effects can be readily derived by a person skilled in the art. Therefore, broader aspects of the present invention are not limited to particular details and representative embodiments as illustrated and described above. Accordingly, embodiments of the present invention are susceptible to various modifications without departing from the spirit or scope of the general concept of the invention as defined by the accompanying claims and equivalents thereof.

In the forgoing embodiment, for example, although the output driven gears 91, 92 and the first and second driven gears 41, 42 have the same constitution and also have the same gear ratio, the diameter and the number of teeth, that is, the gear ratio may differ as long as they are constituted so as to be meshed with the output gear 8.

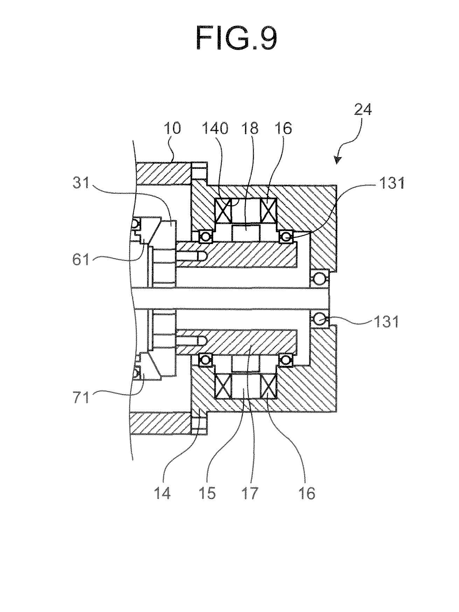

The first power source driving the first differential mechanism 1 and the second power source driving the second differential mechanism 2 have been described as the first hollow actuator 21 including the first motor unit 210 and the second hollow actuator 22 including the second motor unit 220. However, respective motors having a constitution as illustrated in FIG. 9 may be directly coupled to the first driving gear 31 of the first differential mechanism 1 and the second driving gear 32 of the second differential mechanism 2.

FIG. 9 is a diagram illustrating a modification of the power source of the composite drive device 100. A specific constitution of a motor 24 according to an example of the modification is as follows. As illustrated in the figure, a motor case 14 is mounted on an end portion of the housing 10, and an annular stator core 15 is fixedly provided in an annular recess 140 formed in the interior surface of the motor case 14.

A coil 16 is wound around the stator core 15, while a rotor 17 coaxial with the stator core 15 is rotatably supported through a rotor bearing 131 inside the motor case 14. Furthermore, a driving magnet 18 is fixed at a position facing the stator core 15 on the outer peripheral surface of the rotor 17. The motor 24 having such a constitution can also be used to drive the first differential mechanism 1 and the second differential mechanism 2.

Although the robot 110 has been described as a dual-arm robot having a plurality of arm sections, namely, the first arm section 510 to the sixth arm section 560, the robot is not limited thereto as long as it has a joint to which the composite drive device 100 is applicable. The robot may perform not only unpacking of cardboard cartons, but also any other operation.

Reference Signs List

| | |
|---|---|
| 1 | first differential mechanism (first differential mechanism) |
| 2 | second differential mechanism (second differential mechanism) |
| 8 | output gear |
| 9 | speed reducer (speed reduction device) |
| 10 | housing |
| 11 | first output shaft (first output shaft) |
| 12 | second output shaft (second output shaft) |
| 21 | first hollow actuator (first power source) |
| 22 | second hollow actuator (second power source) |
| 31 | first driving gear |
| 32 | second driving gear |
| 41 | first driven gear |
| 42 | second driven gear |
| 51 | first coupling shaft |
| 52 | second coupling shaft |
| 61, 71 | first planetary gear |
| 62, 72 | second planetary gear |
| 91, 92 | output driven gear |
| 100 | composite drive device |
| 110 | robot |

**Claims**

1.  A composite drive device comprising:

    a first output shaft that is supported rotatably around an axis thereof;
    a first differential mechanism and a second differential mechanism that are arranged to face each other on the first output shaft;
    a second output shaft that is provided in a direction orthogonal to the first output shaft between the first differential mechanism and the second differential mechanism and is rotatable around an axis thereof in conjunction with driving of the first differential mechanism and the second differential mechanism; and
    a first power source and a second power source that respectively drive the first differential mechanism and the second differential mechanism, wherein
    power from the first power source and the second power source is distributable to the first output shaft and the second output shaft, without allowing the second output shaft to move around the first output shaft.

2.  The composite drive device according to claim 1, wherein
    the first differential mechanism and the second differential mechanism each include:

    a driving gear and a driven gear that are mounted on the first output shaft to face each other; and
    a pair of planetary gears that are rotatably supported on both ends of a coupling shaft coupled to the first output shaft in a shape of a cross and are each meshed with the driving gear and the driven gear, and

    the second output shaft includes an output gear that is meshed with an outer side of each of the driven gears of the first differential mechanism and the second differential mechanism that face each other.

3.  The composite drive device according to claim 2, wherein an output driven gear in mesh with the output gear is provided on an outer side of each of the driven gears of the first differential mechanism and the second differential mechanism.

4.  The composite drive device according to claim 1, further comprising:

    a housing that accommodates the first differential mechanism and the second differential mechanism, wherein the first output shaft and the second output shaft are supported with the housing, and the first power source and the second power source are accommodated in the housing or attached to the housing to form a unit.

5.  The composite drive device according to claim 1, wherein a first motor unit and a second motor unit are interlocked and coupled as power sources with a driving gear of the first differential mechanism and a driving gear of the second differential mechanism, respectively.

6.  The composite drive device according to claim 1, wherein a speed reducer is coupled to a subsequent stage of at least the second output shaft.

7.  A robot comprising:

    a composite drive device in a joint mechanism, the composite drive device comprising:

        a first output shaft that is supported rotatably around an axis thereof;
        a first differential mechanism and a second differential mechanism that are arranged to face each other on the first output shaft;
        a second output shaft that is provided in a direction orthogonal to the first output shaft between the first differential mechanism and the second differential mechanism and is rotatable around an axis thereof in conjunction with driving of the first differential mechanism and the second differential mechanism; and
        a first power source and a second power source that respectively drive the first differential mechanism and the second differential mechanism, wherein

        power from the first power source and the second power source is distributable to the first output shaft and the second output shaft, without allowing the second output shaft to move around the first output shaft.

# FIG.1

# FIG.2

# FIG.3

## FIG.4

## FIG.5

# FIG.6

# FIG.7

# FIG.8

# FIG.9

<table>
<tr><td colspan="2" style="text-align:center">**INTERNATIONAL SEARCH REPORT**</td><td colspan="2">International application No.<br>PCT/JP2011/067901</td></tr>
<tr><td colspan="4">A.  CLASSIFICATION OF SUBJECT MATTER<br>*F16H37/06*(2006.01)i, *B25J17/00*(2006.01)i<br><br><br>According to International Patent Classification (IPC) or to both national classification and IPC</td></tr>
<tr><td colspan="4">B.   FIELDS SEARCHED</td></tr>
<tr><td colspan="4">Minimum documentation searched (classification system followed by classification symbols)<br>F16H37/06, B25J17/00</td></tr>
<tr><td colspan="4">Documentation searched other than minimum documentation to the extent that such documents are included in the fields searched<br>    Jitsuyo Shinan Koho      1922–1996   Jitsuyo Shinan Toroku Koho   1996–2011<br>    Kokai Jitsuyo Shinan Koho   1971–2011   Toroku Jitsuyo Shinan Koho   1994–2011</td></tr>
<tr><td colspan="4">Electronic data base consulted during the international search (name of data base and, where practicable, search terms used)</td></tr>
<tr><td colspan="4">C.   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td style="text-align:center">A</td><td colspan="2">JP 2009-113195 A  (Tokyo University of Science),<br>28 May 2009 (28.05.2009),<br>entire text; all drawings<br>(Family: none)</td><td style="text-align:center">1-7</td></tr>
<tr><td style="text-align:center">A</td><td colspan="2">Microfilm of the specification and drawings<br>annexed to the request of Japanese Utility<br>Model Application No. 115821/1990(Laid-open<br>No. 73487/1992)<br>(Yaskawa Electric Corp.),<br>26 June 1992 (26.06.1992),<br>entire text; all drawings<br>(Family: none)</td><td style="text-align:center">1-7</td></tr>
<tr><td colspan="2">☒   Further documents are listed in the continuation of Box C.</td><td colspan="2">☐   See patent family annex.</td></tr>
<tr><td colspan="2">*    Special categories of cited documents:<br>"A"  document defining the general state of the art which is not considered<br>     to be of particular relevance<br>"E"  earlier application or patent but published on or after the international<br>     filing date<br>"L"  document which may throw doubts on priority claim(s) or which is<br>     cited to establish the publication date of another citation or other<br>     special reason (as specified)<br>"O"  document referring to an oral disclosure, use, exhibition or other means<br>"P"  document published prior to the international filing date but later than<br>     the priority date claimed</td><td colspan="2">"T"  later document published after the international filing date or priority<br>     date and not in conflict with the application but cited to understand<br>     the principle or theory underlying the invention<br>"X"  document of particular relevance; the claimed invention cannot be<br>     considered novel or cannot be considered to involve an inventive<br>     step when the document is taken alone<br>"Y"  document of particular relevance; the claimed invention cannot be<br>     considered to involve an inventive step when the document is<br>     combined with one or more other such documents, such combination<br>     being obvious to a person skilled in the art<br>"&"  document member of the same patent family</td></tr>
<tr><td colspan="2">Date of the actual completion of the international search<br>    24 August, 2011 (24.08.11)</td><td colspan="2">Date of mailing of the international search report<br>    06 September, 2011 (06.09.11)</td></tr>
<tr><td colspan="2">Name and mailing address of the ISA/<br>   Japanese Patent Office<br><br>Facsimile No.</td><td colspan="2">Authorized officer<br><br><br>Telephone No.</td></tr>
</table>

Form PCT/ISA/210 (second sheet) (July 2009)

**INTERNATIONAL SEARCH REPORT**

| International application No. |
| --- |
| PCT/JP2011/067901 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 61-215833 A  (Mitsubishi Electric Corp.), 25 September 1986 (25.09.1986), entire text; all drawings & US 4729258 A         & EP 195393 A2 | 1-7 |
| A | JP 49-33056 A  (Tokyo Juki Industrial Co., Ltd.), 26 March 1974 (26.03.1974), entire text; all drawings (Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005279856 A